# EUROPÄISCHE PATENTSCHRIFT

(11) **EP 1 070 247 B1**
(45) Veröffentlichungstag und Bekanntmachung des Hinweises auf die Patenterteilung: **06.10.2004**
(21) Anmeldenummer: 99924745.5
(22) Anmeldetag: 01.04.1999
(51) Int. Cl.: G01N 27/64

(54) **IONENMOBILITÄTSSPEKTROMETER**
ION MOBILITY SPECTROMETER
SPECTROMETRE DE MOBILITE IONIQUE

(30) Priorität: 07.04.1998 DE 19815435
(43) Veröffentlichungstag der Anmeldung: 24.01.2001
(73) Patentinhaber: EADS Deutschland GmbH, 81663 München (DE)
(72) Erfinder: GÖBEL, Johann, D-81547 München (DE); BREIT, Ulrich, D-82049 Pullach (DE)
(86) Internationale Anmeldenummer: PCT/DE1999/000992
(87) Internationale Veröffentlichungsnummer: WO 1999/051978

(56) Entgegenhaltungen:
- GB-A- 1 105 604
- GB-A- 2 198 579
- GB-A- 2 255 671
- US-A- 4 724 394
- US-A- 5 420 424

## Beschreibung

Die Erfindung betrifft ein lonenmobilitätsspektrometer gemäB dem Oberbegriff des Anspruchs 1.

Ein lonenmobilitätsspektrometer der genannten Art ist beispielsweise aus der US 4,390,784 bekannt. Ein solches lonenmobilitätsspektrometer dient zum Nachweis auch geringer Anteile von zu analysierenden Stoffen in einem Trägergas und besteht üblicherweise aus einer Ionisationskammer, in der die Moleküle des zu analysierenden Stoffes und des Trägergases ionisiert werden. An diese Ionisationskammer schließt sich eine Driftkammer an. In sie werden die lonen über ein elektrisch schaltbares lonentor eingelassen. Zwischen dem lonentor und einem Ionenkollektor am gegenüberliegenden Ende der Driftkammer herrscht ein axial gerichtetes elektrisches Feld. In diesem bewegen sich die in der ionisationskammer gebildeten lonen entlang der Driftstrecke in Richtung auf den lonenkollektor. Das lonentor ist so geschaltet, daß es einen Schwarm des zu analysierenden Ionengemisches in die Driftkammer einläßt. Dieser Schwarm wird während seiner Drift zum lonenkollektor hin in einzelne Teilschwärme, die für die Bestandteile des Gemisches charakteristisch sind, aufgeteilt. An der Leiterfläche des lonenkollektors werden die lonen neutralisiert und ihre Ladung abgeleitet. Dies wird im weiteren als lonenableitung an einer potentialführenden Fläche bezeichnet. Die Teilschwärme treffen zeitlich versetzt am lonenkollektor auf und werden mittels einer Signalelektronik nachgewiesen. Das erhaltene Signal erlaubt Aussagen über das analysierte Gemisch.

US 4,777,363 beschreibt das lonentor als eine Anordnung von parallelen Drähten, die quer zur Driftachse gespannt sind. Alle geradzahligen Drähte werden miteinander elektrisch verbunden ebenso wie alle ungeradzahligen Drähte. Zwischen den so erhaltenen zwei Drahtgruppen wird zum Sperren des Ionentores eine Spannung angelegt, was aus der Literatur als Bradburry-Nielson-Anordnung bekannt ist. Sind die zwei Drahtgruppen auf gleichem Potential, ist das Tor für die lonen geöffnet; ist dazwischen eine Spannung angelegt, werden die lonen zu den Gitterdrähten abgeleitet und geben ihre Ladungen dort ab. Außerdem verwendet dieses Gerät zur Reduzierung des Einflusses von Spiegelladungen ein vor dem lonenkollektor angeordnetes Aperturgitter, an welchem jedoch lonen durch Entladung verloren gehen.

US 4,390,784 zeigt einen lonenkollektor am Ende der Driftstrecke, der senkrecht zur Driftachse steht und dessen ionenableitende Fläche sich fast über den gesamten Querschnitt der Driftkammer erstreckt.

Die Driftkammer wird üblicherweise von einem Spülgas, z.B. Stickstoff oder Luft, durchflossen. US 4,390,784 zeigt am driftabwärtigen Ende der Driftkammer einen Zufluss und am driftaufwärtigen Ende der Driftkammer einen Abfluss für das Spülgas. Da das Spülgas am Kollektor vorbeigeführt werden muss, kann dieser nicht den gesamten Querschnitt der Driftkammer abdecken. Durch die Gasdurchführung geht bei den bekannten Geräten allerdings prozentual nicht viel Kollektorfläche verloren, da Gasdurchführungen typischerweise eine Weite von 3,2 oder 1,6 mm (1/8 oder 1/16 Zoll) aufweisen und der Driftkammerquerschnitt im Bereich 1 bis 2 cm liegt (US 4,390,784).

Schließlich ist aus der GB 1,105,604 ein Gerät zur Bestimmung von Partikeln, die in einem Luftstrom enthalten sind, beschrieben. Das Gerät verwendet zwar ähnliche Einrichtungen wie ein lonenmobilitätsspektrometer, um die im Luftstrom mitgeführten Partikel zu ionisieren, es benötigt aber auch zusätzliche Einrichtungen, wie zum Beispiel ein vor dem Kollektor angeordnetes Gitter, um die lonen von den Partikeln zu trennen. der Kollektor selbst vermag nicht, wie bei einem lonenmobilitätsspektrometer üblich, die unterschiedlichen Driftzeiten der lonen aufzulösen, sondern er sammelt nur Partikel unterhalb einer bestimmten Größe. Es wird somit keine Anregung gegeben, wie ein bekanntes lonenmobilitätsspektrometer miniaturisiert werden kann.

Will man jedoch ein lonenmobilitätsspektrometer in seinem Querschnitt miniaturisieren, fällt der Flächenverlust durch die Gasdurchführung ins Gewicht. Ein ähnliches Problem stellt bei der Miniaturisierung eines lonenmobilitätsspektrometers das lonentor dar. Ein herkömmliches Bradburry-Nielson Drahtgitter ist schwer zu miniaturisieren, da bei gegebener Drahtstärke nicht mehr ausreichend viele Gitterstäbe auf dem miniaturisierten Querschnitt untergebracht werden können.

Es ist somit Aufgabe der vorliegenden Erfindung, ein lonenmobilitätsspektrometer zu schaffen, das sich zur Miniaturisierung eignet.

Die genannte Aufgabe wird mit den Merkmalen des Patentanspruchs 1 gelöst. Vorteilhafte Weiterbildungen sind in den Unteransprüchen gekennzeichnet.

Erfindungsgemäß ist die potentialführende Fläche des lonentors sowie die potentialführende Fläche des lonenkollektors innen an der Wandung der Driftkammer angeordnet. Dadurch ist es möglich, an den Stirnflächen der Driftkammer die nötigen Öffnungen zum Ab- und Zuführen des Spülgases vorzusehen. ohne die Größe der potentialführenden Fläche einzuschränken. Damit kann ein lonenmobilitätsspektrometer in seinem Querschnitt miniaturisiert werden. Außerdem kann auf das oben erwähnte Aperturgitter verzichtet werden, da durch die geringe Querschnittsfläche des lonenkollektors in Driftachsensichtrichtung die Einwirkung von Influenzladungen der lonenschwärme deutlich geringer ist.

Die ionenableitende Fläche des Kollektors kann natürlich auch aus mehreren Teilflächen zusammengesetzt sein, die elektrisch untereinander oder jede direkt mit Signalnachweiselektronik verbunden sind. Da die ionenableitenden Flächen an einer Wandung der Driftkammer angeordnet sind, verbleibt in einem zentralen, radial inneren Bereich der Driftkammer Platz für eine Öffnung zum Gasdurchführen. Die Kollektorfläche umschließt somit den Gasstrom.

Dadurch, dass die Fläche des Ionentores an einer Wandung der Driftkammer angeordnet ist, kann wie beim Ionenkollektor der Gasstrom ungehindert hindurch geleitet werden.

Insbesondere ist die potentialführende Fläche des Ionentors wie auch des Ionenkollektors innen an der Driftkammerwand vorgesehen. Unter Umständen muss dann zwischen potentialführender Fläche und Driftkammerinnenwand eine Isolierschicht angeordnet werden.

Um alle Ionen am Ende der Driftstrecke durch den Kollektor aufzusammeln, ist die Abmessung der potentialführenden Fläche des Ionenkollektors in Driftrichtung in der Größenordnung der Abmessung der Öffnung quer zur Driftrichtung, durch die das Driftgas zum Spülen hindurchgeführt wird.

Ausführungsbeispiele der Erfindung werden im folgenden anhand einer Zeichnung beschrieben. Es zeigt:
- Fig. 1: einen vereinfachten Längsschnitt eines Ionenmobilitätsspektrometers;
- Fig. 2: eine perspektivische Darstellung einer aufgeschnittenen Driftkammer des Ionenmobilitätsspektrometers in Fig. 1; und
- Fig. 3: eine Schnittdarstellung des Ionenmobilitätsspektrometers aus Fig. 1 entlang der Linie A-A in einer gegenüber Fig. 2 geringfügig abgewandelten Ausführungsform.

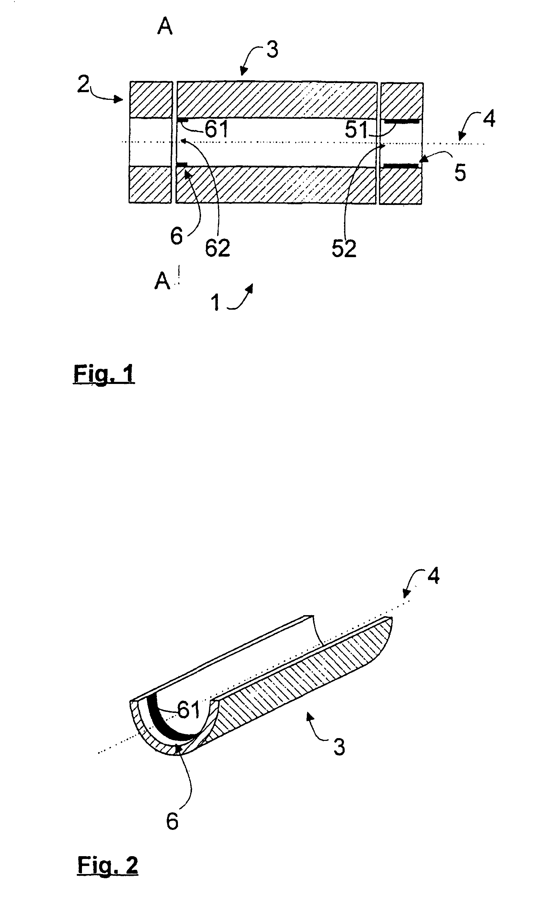

In Fig. 1 ist ein Längsschnitt eines Ionenmobilitätsspektrometers 1 dargestellt. Es hat eine Ionisationskammer 2, in der ein zu analysierendes Substanzgemisch ionisiert und daraus ein gasförmiges Ionengemisch gebildet wird. An die Ionisationskammer 2 schließt sich ein Ionentor 6 an, das eine als Leiterstreifen ausgebildete, potentialführende Fläche 61 hat. Die potentialführende Fläche 61 ist ringförmig ausgebildet, so dass sie eine zentrale Öffnung 62 freilässt. Das Ionentor 6 ist zwischen einem Sperr- und einem Durchlasszustand umschaltbar, um kurzfristig einen Schwarm des Ionengemisches durch die Öffnung 62 in eine sich anschließende Driftstrecke einzulassen.

Die Driftstrecke wird von einer Driftkammer 3 gebildet, in der ein elektrisches Feld längs der Driftkammerachse 4 eingeprägt ist. Ionen, die sich in diesem elektrischen Feld bewegen, wandern abhängig von der ihnen eigenen Ionenbeweglichkeit unterschiedlich schnell entlang der Driftstrecke. Am Ende der Driftstrecke ist ein Ionenkollektor 5 mit einer als Leiterstreifen ausgebildeten, potentialführenden Fläche 51 angeordnet. Die potentialführende Fläche 51 ist ringförmig an der Innenwand der Driftkammer 3 angebracht, sodass sie eine zentrale Öffnung 52 freilässt. Der Ionenkollektor 5 ist mit einer Signalelektronik (nicht dargestellt) verbunden. Ionen, die an der potentialführenden Fläche 51 des Ionenkollektors 5 ankommen, erzeugen dort einen Signalstrom, der von der Signalelektronik verstärkt und ausgewertet wird. Die Anordnung aus Ionisationskammer 2, Ionentor 6, Driftkammer 3 und Ionenkollektor 5 wird von einer Spülgaseinrichtung (nicht dargestellt) mit einem Driftgas durchspült. Dieses Driftgas fließt am driftabwärtigen Ende durch die Öffnung 52 des Kollektors zu, durchströmt die Driftkammer 3, durchläuft die Öffnung 62 des Ionentores 6 und wird dann aus dem System abgeführt.

Ist das Ionentor 6 geschlossen, fließen alle in der Ionisationskammer 2 gebildeten Ionen an der potentialführenden Fläche 61 des Ionentores 6 ab. Das Schließen des Ionentores 6 wird dadurch bewirkt, dass die potentialführende Fläche 61 z. B. auf Nullpotentiat gelegt wird. Es ist dann den Ionen des in der Ionisationskammer 2 gebildeten Ionengemisches nicht möglich, die Driftstrecke entlangzuwandern, da die potentialführenden Flächen 61 des Ionentores 6 eine nicht überwindbare Potentialbarriere darstellen. Das Ionentor 6 kann geöffnet werden, indem seine potentialführende Fläche 61 auf das Potential gelegt wird, das das Driftfeld an dieser Stelle hat. Die Ionen können das Ionentor 6 passieren und dem längs der Driftkammerachse 4 verlaufenden elektrischen Driftfeld zum Ionenkollektor 5 folgen.

Um die Trennung eines Gemisches in Teilschwärme zu ermöglichen, wird in die Driftkammer 3 am driftaufwärtigen Ende, also am Beginn der Driftstrecke, ein einziger Schwarm mit einem Ionengemisch eingelassen. Dazu wird das Ionentor 6 von einer Schaltungselektronik (nicht dargestellt) in einem gewissen Zeitmuster auf- und wieder zugeschaltet. Beim Schließen des Ionentores 6 liegt die potentialführende Fläche 61 auf einem Potential, das sich vom Potential des Driftfeldes am Ort der potentialführenden Fläche 61 unterscheidet. Der Schwarm mit dem Ionengemisch driftet unter dem Einfluss des elektrischen Feldes zum Ionenkollektor 5 und wird dabei in Teilschwärme mit den Komponenten des Gemisches aufgetrennt. Die Auftrennung erfolgt nach der Ionenbeweglichkeit. Am Ende der Driftkammer 3 werden die einzelnen Ionen an den ionenableitenden Flächen 51 des Ionenkollektors 5 aufgesammelt und deren Strom der Signalelektronik (nicht dargestellt) zugeführt.

Da die Öffnung 52 für die Zuführung des Driftgases im zentralen, driftkammerachsnahen Bereich liegt, schränkt sie die Größe der ionenableitenden Fläche 51 des Ionenkollektors 5 nicht ein. Dies erlaubt es, das Ionenmobilitätsspektrometer in seinem Querschnitt zu miniaturisieren.

Um zu verhindern, dass Ionen an der ionenableitenden Fläche 51 vorbeilaufen, ohne an der ionenableitenden Flächen 51 nachgewiesen zu werden, liegt die Breite der ringförmigen ionenableitenden Fläche 51 in Driftrichtung in der Größenordnung des Durchmessers der Öffnung 52. Dadurch ist sichergestellt, dass im wesentlichen alle Feldlinien des Driftfeldes an der ionenableitenden Fläche 51, die auf Bezugspotential liegt, enden, und alle in die Driftstrecke eingebrachten Ionen an der ionen-ableitenden Fläche 51 aufgesammelt werden.

Wie man sich leicht klarmachen kann, haben Ionen, die die Driftkammer nahe der Driftkammerachse 4 durchlaufen, einen längeren Weg bis zur an der Driftkammerinnenwand angeordneten ionenableitenden Fläche 51 des Kollektors 5 als achsferner wandernde Ionen. Dies führt dazu, dass Ionen der gleichen Substanz, die zeitgleich ihre Wanderung durch die Driftstrecke begonnen haben, zu unterschiedlichen Zeitpunkten an der ionenableitenden Fläche 51 des Kollektors 5 auftreffen. Der Zeitunterschied ist um so größer, je größer der Weglängenunterschied zwischen achsnah und achsfem wandernden Ionen ist. Bei einem miniaturisierten Ionenmobilitätsspektrometer, für das die erfindungsgemäße Ionentor- und Kollektoranordnung besonders geeignet ist, beträgt der Durchmesser der Driftkammer unter 5 mm, so dass die Weglängendifferenz und damit die Zeitunterschiede nicht ins Gewicht fallen.

Fig. 2 zeigt eine perspektivische Darstellung der aufgeschnittenen Driftkammer 3 aus Fig. 1. Das Ionentor 6 ist am vorderen Ende zusammen mit der ringförmig ausgebildeten potentialführenden Fläche 61 abgebildet.

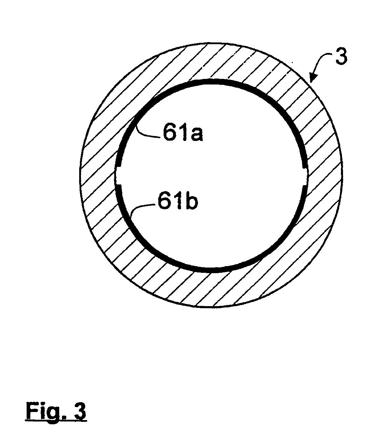

Fig. 3 zeigt einen Schnitt durch ein gegenüber Fig. 2 geringfügig abgewandeltes Ionentor 6 entlang der Linie A-A aus Fig. 1. Das in Fig. 3 dargestellte Ionentor 6 weist im Unterschied zu Fig. 2 zwei potentialführende Teilflächen 61a und 61b auf. Diese Teilflächen 61a und 61b entsprechen der ringförmigen Fläche 61 aus Fig. 2, mit dem Unterschied, dass sie an zwei Stellen durchtrennt wurde. Zwischen den so erhaltenen Halbringen wird zum Sperren des Ionentores von einer Schaltungselektronik (nicht dargestellt) eine Spannung angelegt. Das Potential der Spannung an den potentialführenden Teilflächen (61a, 61b) liegt hierbei über oder unter dem betragsmäß maximalen Potential des Driftbereichs. Diese Spannung, quer zur Richtung des Driftfeldes, drängt in der Ionisationskammer 2 gebildete Ionen zu den potentialführenden Teilflächen 61a und 61b. Zum Öffnen des Ionentores 6 werden die Teilflächen 61a, 61b auf das Potential des Driftfeldes am Ort der potentialführenden Teilflächen gelegt. Somit sehen die Ionen keine Potentialsenke bzw. kein Querfeld und können das Ionentor 6 passieren.

Zur Veranschaulichung wurde in den Ausführungsbeispielen aus Fig. 1 und 2 ein kreisförmiger Querschnitt für die Driftkammer angenommen. Im Rahmen der erfindungsgemäßen Lehre kann der Driftkammerquerschnitt auch andere Formen haben, insbesondere rechteckig bis spaltförmig oder mehreckig sein.

## Patentansprüche

1. lonenmobilitätsspektrometer mit
• einer Ionisationskammer (2) zum lonisieren eines zu analysierenden Substanzgemisches und somit zum Bilden eines gasförmigen lonengemisches;
• einem lonentor (6), das zwischen einem Sperr- und einem Durchlasszustand elektrisch umschaltbar ist, um kurzfristig einen Schwarm des Ionengemisches in eine Driftstrecke einzulassen;
• einer die Driftstrecke bildenden Driftkammer (3) mit einem längs einer Driftkammerachse (4) verlaufenden elektrischen Driftfeld, in dem die lonen des Ionengemisches nach ihrer lonenbeweglichkeit aufgetrennt werden und
• einem lonenkollektor (5) mit einer Signalelektronik zum Nachweis der aufgetrennten lonen, wobei sowohl das lonentor (6) als auch der lonenkollektor (5) eine potentialführende Fläche (51,61) aufweisen,
**dadurch gekennzeichnet, dass** die potentialführende Fläche (61) des lonentors (6) innen an der Wandung der Driftkammer (3) angeordnet ist und im wesentlichen parallel zu dieser Wandung verläuft, dass die potentialführende Fläche (51) des lonenkollektors (5) innen an der Wandung der Driftkammer (3) angeordnet ist und im wesentlichen parallel zu dieser Wandung verläuft, und dass die Abmessung der potentialführenden Fläche (51) des lonenkollektors in Driftrichtung in der Größenordnung der Abmessung einer zentralen Öffnung (52) der Driftkammer (3) quer zur Driftrichtung liegt.

2. Ionenmobilitätsspektrometer nach Anspruch 1, **dadurch gekennzeichnet, dass** die potentialführende Fläche (51) des Ionentors (6) ringförmig ausgebildet ist.

3. Ionenmobilitätsspektrometer nach einem der vorhergehenden Ansprüche, **dadurch gekennzeichnet, dass** die potentialführende Fläche (51, 61) des Ionentores (6) und/oder Ionenkollektors (5) aus zwei oder mehr Teilflächen besteht, die bezüglich der Driftkammerachse diametral gegenüberliegend angeordnet sind.

4. Ionenmobilitätsspektrometer nach Anspruch 3, **dadurch gekennzeichnet, dass** beim Schließen des Ionentores (6) an den potentialführenden Teilflächen (61a, 61b) des Ionentores (6) ein Potential anliegt, welches über oder unter dem betragsmäßig maximalen Potential des Driftbereiches liegt.

5. Ionenmobilitätsspektrometer nach einem der Ansprüche 1 bis 3, **dadurch gekennzeichnet, dass** die potentialführende Fläche (61) des Ionentores (6) beim Schließen des Ionentores (6) auf einem Potential liegt, das sich vom Potential des Driftfeldes am Ort der potentialführende Fläche (61) unterscheidet.

## Claims

1. Ion mobility spectrometer with
- an ionisation chamber (2) for the ionisation of a mixture of substances for analysis so as to form thereby a gaseous mixture of ions,
- an ion gate (6), which can be switched electrically between a closed and an open position in order to permit a portion of the ion mixture to enter a drift portion for a short time,
- a drift chamber (3) forming the drift portion with an electrical drift field along a drift chamber axis (4) in which the ions of the ion mixture are separated according to their ion mobilities, and
- an ion collector (5) with signal electronics to detect the separated ions, in which both the ion gate (6) and also the ion collector (5) have a potential guide surface (51, 61),
**characterised in that** the potential guide surface (61) of the ion gate (6) is located inside the wall of the drift chamber (3) and substantially parallel to that wall, that the potential guide surface (51) of the ion gate (5) is located on the inside of the wall of the drift chamber (3) and substantially parallel to that wall, and that the dimension of the potential guide surface (51) of the ion collector in the drift direction, of the order of magnitude of the dimension of a central opening (52) in the drift chamber (3), lies at right angles to the drift direction.

2. Ion mobility spectrometer according to claim 1, **characterised in that** the potential guide surface (51) of the ion gate (6) is of annular shape.

3. Ion mobility spectrometer according to one of the preceding claims, **characterised in that** the potential guide surface (51, 61) of the ion gate (6) and/or ion collector (5) comprises two or more partial surfaces which are arranged diametrically opposite each other relative to the drift chamber axis.

4. Ion mobility spectrometer according to claim 3, **characterised in that** when the ion gate (6) is closed there is a potential on the partial potential guide surfaces (61a, 61b) of the ion gate (6) which lies above or below the proportionately maximum potential of the drift region.

5. Ion mobility spectrometer according to one of claims 1 to 3, **characterised in that** when the ion door (6) is closed the potential guide surface (61) of the ion door (6) lies at a potential which differs from the potential of the drift field at the location of the potential guide surface (61).

## Revendications

1. Spectromètre de mobilité ionique comportant
- une chambre d'ionisation (2) pour l'ionisation d'un mélange de substances à analyser et, ainsi, pour la formation d'un mélange ionique gazeux ;
- une porte ionique (6) commutable électriquement entre un état de verrouillage et de passage pour introduire pendant une courte durée un essaimage du mélange ionique dans un parcours de dérive ;
- une chambre de dérive (3) formant le parcours de dérive, comportant un champ électrique de dérive s'étendant le long d'un axe (4) de chambre de dérive, dans lequel les ions du mélange ionique sont séparés selon leur mobilité ionique et
- un collecteur ionique (5) avec une électronique de signalisation pour la détection des ions séparés, la porte ionique (6) ainsi que le collecteur ionique (5) présentant une surface potentioconductrice (51, 61),
**caractérisé en ce que**
la surface potentioconductrice (61) de la porte ionique (6) est disposée à l'intérieur contre la paroi de la chambre de dérive (3) et s'étend sensiblement de façon parallèle à cette paroi, la surface potentioconductrice (51) du collecteur ionique (5) est disposé à l'intérieur contre la paroi de la chambre de dérive (3) et s'étend sensiblement de façon parallèle à cette paroi, et le dimensionnement de la surface potentioconductrice (51) du collecteur ionique (5) dans la direction de la dérive est de l'ordre de grandeur du dimensionnement d'une ouverture centrale (52) de la chambre de dérive (3) perpendiculairement à la direction de la dérive.

2. Spectromètre de mobilité ionique selon la revendication 1,
**caractérisé en ce que**
la surface potentioconductrice (51) de la porte ionique (6) est de forme annulaire.

3. Spectromètre de mobilité ionique selon l'une quelconque des revendications précédentes,
**caractérisé en ce que**
la surface potentioconductrice (51, 61) de la porte ionique (6) et/ou du collecteur ionique (5) est constituée de deux surfaces partielles ou plus, disposées en face l'une de l'autre diamétralement par rapport à l'axe de la chambre de dérive.

4. Spectromètre de mobilité ionique selon la revendication 3,
**caractérisé en ce qu'**
à la fermeture de la porte ionique (6), un potentiel qui se situe au-dessus ou en dessous du potentiel de montant maximum de la plage de dérive se trouve sur les surfaces partielles potentioconductrices (61a, 61b) de la porte ionique (6).

5. Spectromètre de mobilité ionique selon l'une quelconque des revendications 1 à 3,
**caractérisé en ce que**
la surface potentioconductrice (61) de la porte ionique (6) se trouve, à la fermeture de la porte ionique (6), à un potentiel qui se différencie du potentiel du champ de dérive à l'emplacement de la surface potentioconductrice (61).
